# FASCICULE DE BREVET EUROPEEN

(11) **EP 4 416 317 B1**
(45) Date de publication et mention de la délivrance du brevet: **21.01.2026**
(21) Numéro de dépôt: 22814472.1
(22) Date de dépôt: 06.10.2022
(51) Int. Cl.: C25B 1/04, H01M 8/04082, H01M 8/04223, H01M 8/04955, H01M 8/12

(54) **MODULE POUR DISPOSITIF ÉLECTROCHIMIQUE À DURÉE DE VIE AUGMENTÉE**
MODUL FÜR EIN ELEKTROCHEMISCHES GERÄT MIT ERHÖHTER LEBENSDAUER
MODULE FOR ELECTROCHEMICAL DEVICE WITH HIGHER LIFETIME

(30) Priorité: 11.10.2021 FR 2110725
(43) Date de publication de la demande: 21.08.2024
(73) Titulaire: Commissariat à l'Energie Atomique et aux Energies Alternatives, 75015 Paris (FR)
(72) Inventeur: DI IORIO, Stéphane, 38054 GRENOBLE CEDEX 09 (FR); CHATROUX, André, 38054 GRENOBLE CEDEX 09 (FR); MOUGIN, Julie, 38054 GRENOBLE CEDEX 09 (FR); PALCOUX, Géraldine, 38054 GRENOBLE CEDEX 09 (FR); REYTIER, Magali, 38054 GRENOBLE CEDEX 09 (FR)
(74) Mandataire: Santarelli
(86) Numéro de dépôt international: PCT/FR2022/051886
(87) Numéro de publication internationale: WO 2023/062304

(56) Documents cités:
- US-A1- 2004 185 319
- US-A1- 2007 268 727
- US-A1- 2012 043 820
- US-A1- 2014 087 286

## Description

### DOMAINE TECHNIQUE ET ÉTAT DE LA TECHNIQUE ANTÉRIEURE

La présente invention se rapporte à un module pour dispositif électrochimique présentant une durée de vie augmentée.

Le dispositif électrochimique peut être mis en œuvre pour l'électrolyse à haute température et comporter un empilement de cellules d'électrolyseur à oxyde solide ou SOEC (solid oxide electrolyzer cell en terminologie anglo-saxonne) ou en tant que pile à combustible et comporter un empilement de cellules à combustible à oxyde solide ou SOFC (Solid oxide fuel cell en terminologie anglo-saxonne).

Un tel dispositif comporte un module ou stack comprenant un empilement de cellules électrochimiques enserrées entre deux plaques de serrage. Les cellules sont connectées électriquement en série.

Chaque cellule électrochimique comporte un électrolyte entre deux électrodes. Des plaques d'interconnexion sont interposées entre les cellules et assurent la connexion électrique entre les cellules. En outre les plaques d'interconnexion assurent l'alimentation en gaz des cellules et la collecte des gaz produits au niveau de chaque cellule. Le document EP3183379 décrit un exemple de plaque d'interconnexion ou connecteur assurant la connexion électrique et la distribution des gaz au sein des cellules. L'interconnecteur comporte trois plaques de faible épaisseur, une des plaques dite plaque intermédiaire disposée entre les deux autres plaques, dites plaques d'extrémité, permet la distribution des gaz au sein des chambres à O₂ et à H₂.

L'une des plaques d'extrémité forme un cadre délimitant une fenêtre sur la plaque intermédiaire et recevant une cellule qui est alors en contact avec la plaque intermédiaire. Le courant électrique passe de bas en haut ou de haut en bas à travers les cellules et les zones des interconnecteurs, qui sont alignées verticalement avec les cellules.

En fonctionnement, l'anode et la cathode sont le siège de réactions électrochimiques, tandis que l'électrolyte permet le transport d'ions de la cathode vers l'anode, ou inversement suivant que le dispositif électrochimique fonctionne en mode électrolyseur ou en mode pile à combustible.

Ainsi en mode électrolyseur, le compartiment cathodique permet un apport de vapeur d'eau et une évacuation des produits de réduction de l'eau, notamment de l'hydrogène, tandis que le compartiment anodique assure, via un gaz drainant, l'évacuation du dioxygène produit de l'oxydation des ions O²⁻ migrant de la cathode vers l'anode.

Le mécanisme d'électrolyse (mode « SOEC ») de la vapeur d'eau par une cellule électrochimique élémentaire est décrit ci-dessous. Au cours de cette électrolyse, la cellule électrochimique élémentaire est alimentée par un courant circulant de la cathode vers l'anode. La vapeur d'eau distribuée par le compartiment cathodique est alors réduite sous l'effet du courant selon la demi-réaction suivante :

2 H₂O + 4 e⁻ → 2 H₂ + 2 O²⁻.

Le dihydrogène produit lors de cette réaction est alors évacué, tandis que les ions O²⁻ produits lors de cette réduction migrent de la cathode vers l'anode, via l'électrolyte, où ils sont oxydés en dioxygène selon la demi-réaction :

2 O²⁻ → O₂ + 4 e⁻.

Le dioxygène ainsi formé est quant à lui évacué par le gaz drainant circulant dans le compartiment anodique.

L'électrolyse de la vapeur d'eau répond à la réaction suivante :

2 H₂O → 2 H₂ + O₂.

En mode pile à combustible (« SOFC »), de l'air est injecté dans le compartiment cathodique qui se dissocie en ions O²⁻. Ces derniers migrent vers l'anode et réagissent avec du dihydrogène circulant dans le compartiment anodique pour former de l'eau. En variante, la pile à combustible est alimentée en CH₄ et en air.

Le fonctionnement en mode pile à combustible permet la production d'un courant électrique.

Ces systèmes peuvent fonctionner à des températures comprises entre 600°C et 1000°C.

Les plaques de serrage exercent un effort de serrage sur l'empilement afin d'assurer un bon contact électrique entre les plaques d'interconnexion et les cellules et une étanchéité de l'empilement.

Le pilotage thermique d'un empilement de cellules et d'interconnecteurs est complexe. En effet par exemple en SOEC, suivant le point de fonctionnement utilisé, qui se caractérise par un courant total et une tension aux bornes de chacune des cellules, une réaction endothermique ou exothermique a lieu. Pour une cellule, pour une tension à ses bornes inférieure à 1,3 V, la cellule consomme de la chaleur lors des réactions électrochimiques et, pour une tension à ses bornes supérieure à 1,3 V, la cellule produit de la chaleur. Ce pilotage thermique est complexe car la production ou la consommation de chaleur va conduire à des gradients thermiques au sein de l'empilement. Ces gradients génèrent des contraintes thermomécaniques pouvant conduire à la destruction de l'objet. De plus une forte élévation de température peut endommager les joints d'étanchéité entres les interconnecteurs, en particulier lorsque ceux-ci sont formés de verre ou de vitrocéramique.

Si une cellule est défectueuse par exemple du fait de mauvais contacts électriques ou d'une dégradation de la cellule, la tension à ses bornes augmente, ce qui génère de la chaleur.

Le phénomène d'échauffement apparaît également dans une pile à combustible dont une des cellules au moins est défectueuse.

Or, en raison de la complexité de son étanchéité et du caractère fragile d'un empilement, par exemple lorsqu'il comporte des parties céramiques scellées par du verre ou de la vitrocéramique, il n'est pas envisageable de démonter un empilement pour remplacer une cellule défectueuse. En conséquence, pour un empilement composé de nombreuses cellules, tout l'empilement doit être arrêté même si une seule cellule ne fonctionne pas correctement.

De plus, il faut également noter qu'en cas de problème de distribution de gaz réducteur sur une cellule, celle-ci peut se réoxyder et devenir isolante. Dans ce cas, aucun fonctionnement n'est possible pour l'empilement complet puisqu'il existe un étage isolant.

Ces risques sont d'autant plus grands que le nombre de cellules dans un empilement est important.

On connaît par ailleurs le document US 2014/087286 A1 qui décrit une méthode pour court-circuiter une cellule défectueuse d'une pile à combustible, ainsi que les documents US 2012/043820 A1, US 2004/185319 A1 et US 2007/268727 A1 qui décrivent des piles à combustible comprenant un circuit de contrôle.

### EXPOSÉ DE L'INVENTION

C'est par conséquent un but de la présente invention d'offrir un module pour dispositif électrochimique présentant une durée de vie augmentée en disposant de moyens pour limiter les sources d'échauffement et/ou pour contourner une cellule isolante.

Le but énoncé ci-dessus est atteint par un interconnecteur pour module électrochimique comportant un empilement de cellules électrochimiques et des interconnecteurs interposés entre les cellules, l'interconnecteur comportant des moyens pour permettre de court-circuiter une ou plusieurs cellules électrochimiques lorsque la tension à ses bornes ou à leurs bornes est trop élevée et/ou lorsque la ou les cellules sont isolantes.

Ainsi lorsqu'une cellule est le siège d'un échauffement trop important du fait d'une dégradation de celle-ci ou de ses contacts électriques et/ou lorsqu'une cellule est devenue isolante notamment du fait d'une réoxydation, la cellule peut être isolée électriquement. Une cellule ne fonctionne plus mais le module peut continuer à fonctionner et le risque d'une destruction de l'empilement due à une surchauffe notamment est supprimé. Le module présente alors une durée de vie augmentée par rapport aux modules de l'état de la technique qui sont mis au rebus faute de pouvoir remplacer la ou les cellules défectueuses.

L'invention a ainsi pour objet, selon l'un de ses aspects, un interconnecteur pour module électrochimique qui comporte un empilement de cellules électrochimiques et d'interconnecteurs, chaque cellule étant disposée entre deux interconnecteurs et en contact électrique et mécanique avec lesdits interconnecteurs, et des éléments d'isolation électrique, chaque élément d'isolation électrique étant interposé entre deux interconnecteurs et entourant une cellule, dans lequel l'interconnecteur comporte au moins une plaque intermédiaire reçue entre deux plaques d'extrémité définissant entre elles des chambres d'alimentation en gaz et de collecte de gaz, dans lequel la plaque intermédiaire comporte une zone centrale délimitée extérieurement par une zone latérale comportant n zones latérales de dérivation, n étant au moins égal à 1, chaque zone latérale de dérivation étant configurée pour pouvoir être rapprochée d'une zone latérale de dérivation d'une plaque intermédiaire d'un interconnecteur directement adjacent dans l'empilement, et entrer en contact avec celle-ci de sorte à assurer une conduction électrique entre les deux interconnecteurs, la plaque intermédiaire n'étant pas recouverte par au moins l'une des deux plaques d'extrémité au niveau d'une zone latérale de dérivation.

En d'autres termes, le module intègre des moyens permettant de court-circuiter sélectivement une cellule au sein de l'empilement.

L'interconnecteur selon l'invention peut en outre comporter l'une ou plusieurs des caractéristiques suivantes prises isolément ou suivant toutes combinaisons techniques possibles.

Selon un premier aspect, tout ou partie des n zones latérales de dérivation peut se présenter sous la forme de n zones exposées de la plaque intermédiaire, non superposées à au moins l'une des deux plaques d'extrémité, notamment n zones exposées situées au niveau d'un ou plusieurs angles de la plaque intermédiaire. Elles peuvent notamment être obtenues par découpe d'au moins l'une des deux plaques d'extrémité.

Selon un deuxième aspect, tout ou partie des n zones latérales de dérivation peut se présenter sous la forme de n extensions latérales en saillie extérieurement par rapport à la zone latérale de la plaque intermédiaire, les n extensions latérales s'étendant notamment latéralement au-delà des rebords des plaques d'extrémité. Ainsi, l'interconnecteur peut comporter une ou des pattes, ou encore languettes, en saillie de la zone latérale, celle(s)-ci peut ou peuvent être connectées avec la ou les pattes de l'interconnecteur située directement en dessous ou au-dessus dans l'empilement pour court-circuiter la cellule située entre les deux interconnecteurs.

Les moyens de court-circuit sont configurés pour présenter une impédance inférieure à celle de l'ensemble interconnecteurs et cellule à court-circuiter.

De manière très avantageuse, les zones latérales de dérivation peuvent être réparties sur le contour extérieur de chaque interconnecteur autour de l'axe de l'empilement, ce qui permet de limiter les perturbations appliquées au fonctionnement des autres cellules en amont et en aval de la cellule court-circuitée.

Les zones latérales de dérivation peuvent être d'un seul tenant avec la plaque intermédiaire.

En outre, les zones latérales de dérivation peuvent être recouvertes par un matériau conducteur électrique et protégeant de la corrosion, par exemple un alliage cobalt manganèse ou cobalt cérium.

Par ailleurs, l'invention a également pour objet, selon un autre de ses aspects, un module pour dispositif électrochimique comportant un empilement de cellules électrochimiques et d'interconnecteurs tels que définis précédemment, chaque cellule étant disposée entre deux interconnecteurs et en contact électrique et mécanique avec lesdits interconnecteurs, et des éléments d'isolation électrique, lesdites zones latérales de dérivation de deux interconnecteurs directement adjacents étant au moins en partie en regard.

Les éléments d'isolation électrique peuvent être en mica.

Avantageusement, un élément conducteur électriquement peut être ajouté entre lesdites zones latérales de dérivation de deux interconnecteurs directement adjacents, notamment un grille d'or et/ou une pâte d'or.

De plus, le rapport entre la surface de dérivation formée par les zones latérales de dérivation de deux interconnecteurs et la surface active de la cellule située entre les deux interconnecteurs peut être compris entre 1/100 et 1/2 et être de préférence égal à 1/10.

Chaque élément d'isolation électrique peut recouvrir les zones latérales de dérivation.

En outre, chaque élément d'isolation électrique peut comporter des prédécoupes pour faciliter le retrait de portion de l'élément d'isolation électrique au droit des zones latérales de dérivation.

De plus, l'élément d'isolation électrique peut assurer également l'étanchéité entre deux interconnecteurs.

Par ailleurs, l'invention a aussi pour objet, selon un autre de ses aspects, un électrolyseur à oxyde solide comportant un module tel que défini précédemment, une alimentation en gaz des cellules, une collecte des gaz produits par chaque cellule et une alimentation électrique configurée pour alimenter en série les cellules.

L'invention a encore pour objet, selon un autre de ses aspects, une pile à combustible à oxyde solide comportant un module tel que défini précédemment, une alimentation en dihydrogène (H₂) et en dioxygène (O₂) ou en méthane (CH₄) et en air des cellules, une collecte des gaz produits par chaque cellule et des moyens de collecte du courant électrique produit par chaque cellule électrochimique.

Par ailleurs, l'invention a également pour objet, selon un autre de ses aspects, un procédé de mise en court-circuit d'une cellule d'un tel que défini précédemment, comportant :
- mise en contact, éventuellement par déformation, des n zones latérales de dérivation des interconnecteurs disposés directement de part et d'autre de ladite cellule, de sorte à rapprocher les zones latérales de dérivation l'une de l'autre,
- solidarisation des zones latérales de dérivation afin de former n chemins conducteurs électriques entre les deux interconnecteurs.

La solidarisation peut être obtenue par une soudure par point.

De plus, le procédé peut comporter une étape de retrait par abrasion d'une couche d'oxyde sur chacune des zones latérales de dérivation préalablement à leur solidarisation.

### BRÈVE DESCRIPTION DES DESSINS

La présente invention sera mieux comprise sur la base de la description qui va suivre et des dessins en annexe sur lesquels:
- la figure 1 est une représentation schématique d'un exemple d'un module d'un dispositif électrochimique selon l'invention dans un état où toutes les cellules sont traversées pas un courant électrique,
- la figure 2 représente le module de la figure 1 dans un état dans lequel une cellule est court-circuitée,
- la figure 3 est une vue en perspective d'un exemple d'interconnecteur selon l'invention,
- la figure 4 est une vue en éclaté de l'interconnecteur de la figure 3,
- la figure 5 est une vue de détail d'un autre exemple de réalisation d'un module selon l'invention,
- la figure 6 est une vue partielle en perspective d'un autre exemple d'interconnecteur selon l'invention,
- la figure 7 est une représentation graphique de la variation de tension au sein de chaque cellule d'un module en faisant varier le courant traversant le module, comportant deux cellules défectueuses et connectées en série avec les autres cellules du module, et
- la figure 8 est une représentation graphique de la variation de tension au sein de chaque cellule du module de la figure 7 en imposant le courant traversant le module, dans lequel les deux cellules défectueuses ont été court-circuitées électriquement grâce à la présente invention.

### EXPOSÉ DÉTAILLÉ DE MODES DE RÉALISATION PARTICULIERS

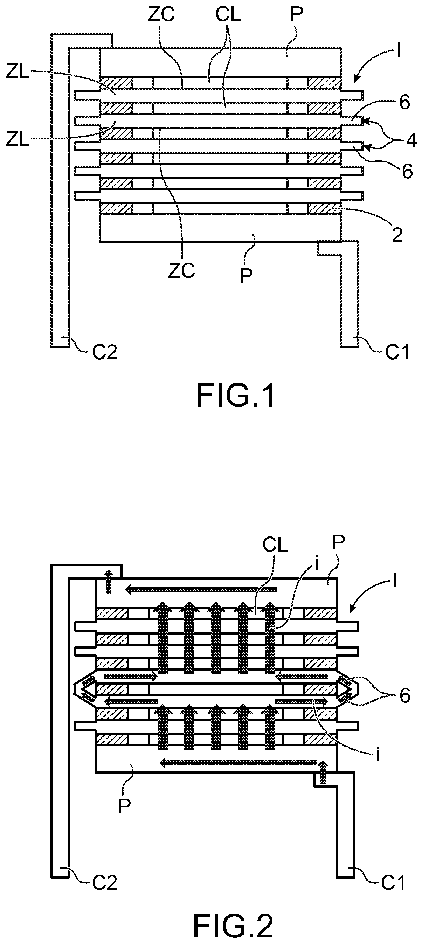

Sur les figures 1 et 2, on peut voir une représentation schématique d'un exemple de réalisation d'un module pour dispositif électrochimique selon l'invention.

Le dispositif électrochimique auquel peut appartenir le module peut être destiné à être mis en œuvre pour l'électrolyse à haute température (mode « SOEC ») ou en tant que pile à combustible (mode « SOFC »).

Le module comporte un empilement de cellules électrochimiques ou cellules à oxydes solides. Les cellules électrochimiques élémentaires CL sont chacune formées d'une cathode, d'une anode et d'un électrolyte disposé entre l'anode et la cathode. L'électrolyte est un matériau conducteur d'ions solide et dense, et l'anode et la cathode sont des couches poreuses.

Le module comporte en outre des interconnecteurs I, chacun interposé entre deux cellules successives et assurant la connexion électrique entre une anode d'une cellule et une cathode de la cellule adjacente. Les interconnecteurs I assurent une connexion en série des cellules élémentaires.

Un module peut comporter entre une cellule et plusieurs centaines de cellules, de préférence entre 25 cellules et 100 cellules.

Les interconnecteurs délimitent également des compartiments fluidiques au niveau de la surface des électrodes avec lesquelles ils sont en contact.

La face d'un interconnecteur I en contact avec une anode d'une cellule électrochimique élémentaire CL délimite un compartiment, dit compartiment anodique, et la face d'un interconnecteur I en contact avec une cathode d'une cellule électrochimique élémentaire CL délimite un compartiment, dit compartiment cathodique.

Chacun des compartiments anodique et cathodique permet la distribution et la collecte desdits gaz.

Par exemple, pour l'électrolyse de l'eau, le compartiment cathodique assure une alimentation en vapeur d'eau de la cathode et l'évacuation de l'hydrogène produit. Le compartiment anodique assure la circulation d'un gaz drainant et l'évacuation de l'oxygène produit au niveau de l'anode.

Le module peut comporter des plaques terminales P disposées de part et d'autre du module. Les plaques terminales sont conductrices électriques.

Le dispositif comporte également des tubes (non représentés) pour distribuer les gaz et des tubes pour collecter les gaz.

En général, le dispositif électrochimique comprend également un système de serrage (non représenté) pourvu de deux plaques de serrage, disposées de part et d'autre de du module dans la direction de l'empilement et destinées à exercer un effort de serrage sur l'empilement par l'intermédiaire de tirants.

L'une et/ou l'autre des deux plaques de serrage est ou sont pourvues d'au moins un conduit de circulation des gaz qui permet la circulation de gaz d'une entrée de gaz vers une sortie de gaz afin d'alimenter en gaz ou à évacuer des gaz de l'empilement à oxydes solides.

L'entrée et la sortie de gaz sont disposées, respectivement, sur l'une et l'autre des faces de plus grande surface de la plaque de serrage.

Chaque interconnecteur I présente une forme sensiblement plane et comporte une zone centrale ZC et une zone latérale ZL entourant la zone centrale ZC.

Les interconnecteurs présentent une surface plus grande que celle des cellules et chaque cellule est en contact par une face avec une zone centrale ZC d'un interconnecteur et par une autre face avec une zone centrale ZC de l'autre interconnecteur.

Des éléments d'isolation électrique 2 sont interposés entre les interconnecteurs, plus particulièrement entre les zones latérales ZL de deux interconnecteurs en contact avec la même cellule. Les éléments d'isolation électrique 2 forment un cadre entourant la cellule. Les moyens d'isolation électrique sont par exemple en mica, en vermiculite, thermiculite ou tout autre matériau présentant de bonnes propriétés d'isolation thermique à haute température.

Par exemple et de manière préférée, les éléments d'isolation électrique 2 associés à une vitrocéramique assurent également l'étanchéité. Un exemple d'un tel élément est décrit dans le document EP1362100, celui-ci comprend un moyen de support par exemple mica, entourant la cellule et en contact avec les zones latérales des interconnecteurs et un moyen pour assurer l'étanchéité, par exemple en verre ou en vitrocéramique. Le moyen support comporte un canal le traversant de part en part de sorte à relier ses deux faces en contact avec les interconnecteurs. Lors de la fabrication du module une pression et un chauffage suffisants sont appliqués pour provoquer la fusion du verre qui s'écoule dans le canal et vient en contact avec les deux interconnecteurs assurant l'étanchéité.

Par ailleurs, des moyens de connexion électrique de l'empilement sont prévus de sorte à alimenter en série les cellules dans le cas d'un électrolyseur, ou à collecter le courant électrique produit dans le cas d'une pile à combustible. Sur la figure 1, les moyens de connexion électrique comportent une canne de courant C1 connectée à la plaque terminale inférieure et une canne de courant C2 connectée à la plaque terminale supérieure. Le courant circule de préférence de bas en haut.

Chaque interconnecteur I comporte des moyens de court-circuit 4. Les moyens de court-circuit 4 d'un interconnecteur I en contact avec une face d'une cellule, coopèrent avec des moyens de court-circuit 4 de l'interconnecteur I en contact avec l'autre face de la cellule, permettant de court-circuiter cette cellule et donc de limiter, dans le cas d'un électrolyseur, la circulation de courant à travers celle-ci, réduisant ainsi la tension à ses bornes et la génération de chaleur.

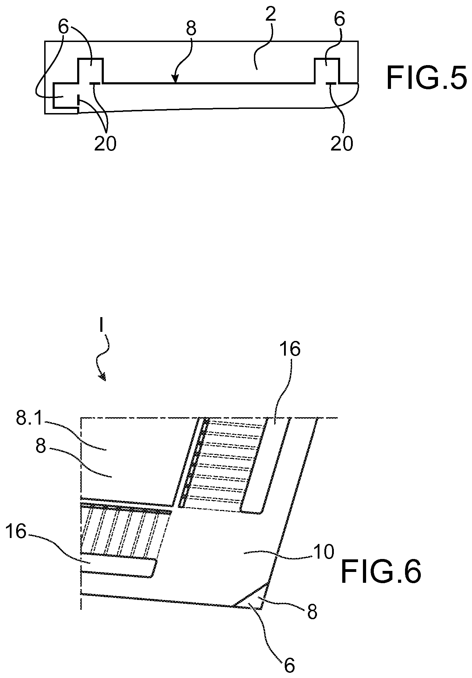

Conformément à l'invention, les moyens de court-circuit 4 comportent une ou plusieurs zones latérales de dérivation 6 de l'interconnecteur I, sous la forme d'extensions latérales 6 dans l'exemple des figures 1 à 5 et sous la forme de zones exposées 6 dans l'exemple de la figure 6.

La plaque intermédiaire 8 n'est avantageusement pas recouverte par les plaques d'extrémité 10, 12 au niveau de ces zones latérales de dérivation 6.

Les zones latérales de dérivation 6 sous la forme d'extensions latérales comme dans l'exemple des figures 1 à 5 s'étendent du rebord extérieur de l'interconnecteur I vers l'extérieur, de sorte que dans l'empilement cette ou ces extensions fasse(nt) saillie de la surface latérale extérieure générale de l'empilement.

Dans l'exemple de la figure 6, les zones latérales de dérivation 6 sont sous la forme de zones exposées 6 qui sont obtenues par une ou plusieurs modifications des plaques d'extrémité 10, 12 de sorte à ne pas recouvrir la plaque intermédiaire 8 par endroits, en particulier au niveau des angles ou coins de la plaque intermédiaire 8 comme visible sur la figure 6. Les plaques d'extrémité 10, 12 sont ainsi raccourcies au niveau de ces angles.

Autrement dit, les zones latérales de dérivation 6 sont obtenues par raccourcissement de l'une au moins des plaques d'extrémité 10, 12 et/ou par extension de la plaque intermédiaire 8 au-delà de sa zone latérale ZL.

Les zones latérales de dérivation 6 sont telles qu'elles peuvent être éventuellement déformées, notamment dans le cas d'extensions latérales 6, afin d'être mises en contact avec les zones latérales de dérivation 6 de l'interconnecteur I situé directement en-dessous ou au-dessus dans l'empilement.

Dans l'empilement, chaque zone latérale de dérivation 6 d'un interconnecteur I est située au moins en partie à l'aplomb d'une zone latérale de dérivation 6 de chaque interconnecteur I et avantageusement entièrement à l'aplomb d'une zone latérale de dérivation 6 de chaque interconnecteur I. Ainsi chaque zone latérale de dérivation 6 par simple déformation normale au plan moyen de l'interconnecteur I ,notamment, peut être mise en contact avec une zone latérale de dérivation 6 d'un interconnecteur I situé directement au-dessus ou au-dessous. Le plan moyen de l'interconnecteur I est le plan dans lequel s'étend l'interconnecteur I et dans lequel il présente ses plus grandes dimensions.

Lorsque la ou les zones latérales de dérivation 6 de deux interconnecteurs I situés de part et d'autre d'une cellule sont mises en contact et assemblées de préférence par pointage comme cela est représenté sur la figure 2, la cellule est court-circuitée électriquement et le courant circule préférentiellement via les zones latérales de dérivation 6. Un courant très faible circule encore dans la cellule. Le pointage permet un assemblage efficace tout en limitant les risques de détérioration des éléments environnant les zones latérales de dérivation 6. En variante, la connexion est réalisée par soudure par apport de matière, néanmoins des précautions particulières sont à prendre pour ne pas détériorer le reste de l'empilement. Il est également possible d'adjoindre un élément très conducteur entre les deux zones latérales de dérivation 6 pour favoriser le contact, notamment dans le cas d'extensions exposées comme sur la figure 6, par exemple une grille d'or, une pâte d'or ou tout autre élément très conducteur.

De manière préférée, les moyens de court-circuit comportent plusieurs extensions latérales formant des pattes réparties sur tout le bord extérieur de l'interconnecteur. Lorsqu'une cellule est court-circuitée la répartition du courant circulant directement entre les deux interconnecteurs est alors plus homogène, ce qui est favorable au fonctionnement des cellules situées en amont et en aval de la cellule court-circuitée. L'amont et l'aval sont considérés par rapport au sens de circulation du courant électrique dans l'empilement. En outre l'échauffement est réduit et déporté dans une zone non utile de l'empilement, c'est-à-dire hors des zones centrales ZC. Un échauffement sur les extensions latérales est sans conséquence pour l'électrolyseur.

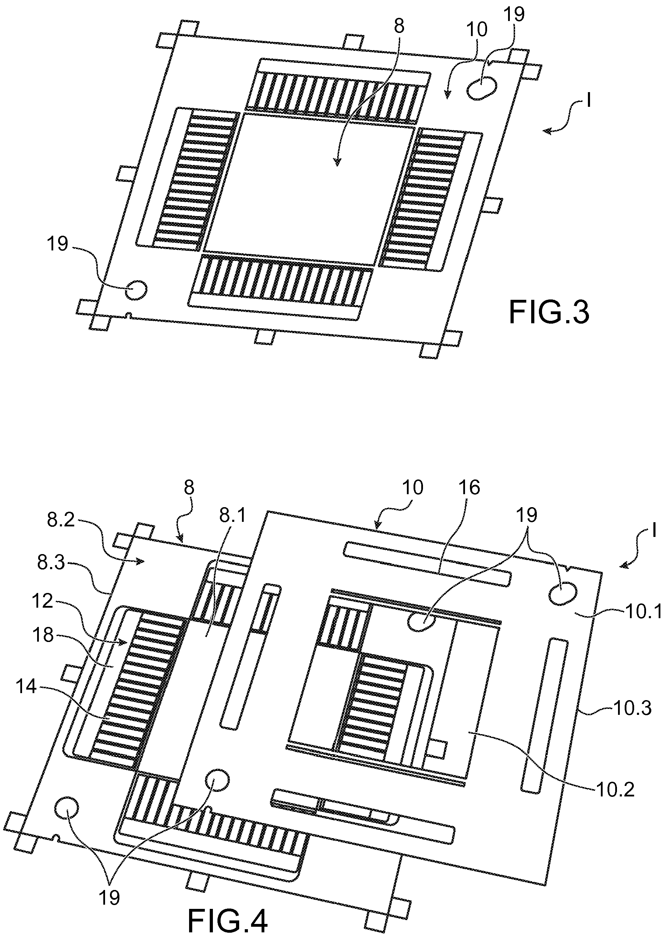

Sur les figures 3 et 4, on peut voir un premier exemple de réalisation d'un interconnecteur selon l'invention, et sur la figure 6, on peut voir un deuxième exemple de réalisation d'un interconnecteur selon l'invention. Les figures 3 et 4 sont ici décrites mais des références identiques sur la figure 6 désignent des éléments identiques ou analogues.

L'interconnecteur I comporte donc une plaque intermédiaire 8 et deux plaques d'extrémité 10, 12 entre lesquelles est reçue la plaque intermédiaire 8. Un exemple d'une telle structure d'interconnecteur sans les moyens de court-circuit est décrit dans le document EP3183379.

Les trois plaques délimitent entre elles des chambres d'alimentation. Par exemple, dans le cas d'un électrolyseur, la plaque intermédiaire 8 permet l'alimentation en gaz de la chambre à O₂ de la plaque 10 et de la chambre à H₂ de la plaque 12.

La plaque intermédiaire 8 comporte une partie centrale 8.1, destinée à être en contact avec une face d'une cellule, et une partie latérale 8.2 entourant la partie centrale 8.1 comportant des lumières 14. Dans cet exemple, la partie latérale 8.2 comporte quatre groupes de lumières répartis le long de chacun d'un bord extérieur 8.3 de la plaque intermédiaire 8. Les lumières ont une forme de fente perpendiculaire à un bord et sont reliées par une lumière parallèle au bord.

La première plaque d'extrémité 10 comporte une partie centrale 10.1 évidée de sorte à entourer la cellule, et une partie latérale 10.2 entourant la partie centrale. La partie latérale 10.2 comporte quatre lumières 16 s'étendant chacune parallèlement à un bord extérieur 10.3 de la première plaque d'extrémité. Chaque lumière est formée par une fente allongée.

La deuxième plaque d'extrémité 12 comportant une partie centrale et une partie latérale. La partie latérale comporte quatre lumières 18 s'étendant chacune parallèlement à un bord extérieur de la deuxième plaque d'extrémité. Chaque lumière est formée par une fente allongée.

Par « lumière » on entend ici et dans le cadre de l'invention, un trou débouchant de part et d'autre d'une plaque.

Les trois plaques 8, 10, 12 comportent également des orifices de guidage 19, par exemple de forme ronde et/ou oblongue, permettant de faire passer les tiges de guidage. Ces tiges permettent aux différents étages d'être guidés lors du serrage, la force de maintien étant soumise au sommet de l'empilement et transmise sur toute la surface.

La plaque intermédiaire 8 et les deux plaques d'extrémité 10, 12 ont les mêmes surfaces ou sensiblement les mêmes surfaces et lorsque les trois plaques sont superposées, les bords extérieurs des trois plaques sont alignés les uns avec les autres le long de la direction verticale de sorte à définir quatre faces latérales de l'empilement, formant la surface latérale de l'empilement. Il sera compris que d'autres formes de plaque peuvent être envisagées, par exemple des formes polygonales, voire circulaires ou ellipsoïdales.

Les plaques sont de préférence des tôles métalliques, avantageusement en acier ferritique. Les épaisseurs des plaques sont typiquement comprises entre 0,1 mm et 1 mm, avantageusement égale à 0,2 mm.

En outre la plaque intermédiaire 8 comporte les extensions latérales 6 dans l'exemple des figures 3 et 4. Il s'agit par contre de zones exposées latérales 6 dans l'exemple de la figure 6.

Lorsque les cellules et les interconnecteurs sont empilés, les extensions latérales 6 des interconnecteurs I font saillie de la surface latérale de l'empilement de sorte à être accessibles.

Dans cet exemple, trois extensions sont prévues sur chaque bord 8.3 de la plaque. Les extensions sont disposées sur les quatre bords extérieurs. Les angles étant plus faciles d'accès, une extension est prévue sur chaque côté de chaque angle comme dans l'exemple représenté. Le nombre d'extensions latérales n'est pas limitatif, il est choisi en fonction de la surface de chaque extension afin que l'ensemble représente une surface suffisamment grande pour que la conductivité électrique de la surface de dérivation formée par l'ensemble des extensions latérales soit supérieure à la conductivité électrique de la cellule à court-circuiter.

Dans cet exemple les extensions latérales ont une forme rectangulaire, ce qui permet d'offrir une surface de contact entre les extensions latérales importante favorable à la conductivité thermique. D'autres formes sont envisageables, par exemple un forme triangulaire ou en partie circulaire.

Avantageusement pour une surface active de 100 cm², i.e. ce qui correspond à la surface de la cellule et de la zone centrale 8.1 de la plaque intermédiaire, la surface de dérivation totale dans le plan formée par toutes les extensions latérales est comprise entre 1 cm² et 50 cm², de manière préférée égale à 10 cm².

Avantageusement, le rapport entre la surface de dérivation et la surface active est compris entre 1/100 et 1/2 et est de préférence égal à 1/10.

Le nombre d'extensions latérales est avantageusement compris entre 4 et 24 et de préférence égal à 12 comme sur les figures 3 et 4.

Avec une telle réalisation, la tension d'une cellule défectueuse peut être sensiblement abaissée à une valeur entre 0V et 0,5V, préférentiellement égale à 0,1V.

Dans un exemple de réalisation avantageux, au moins les extensions latérales sont recouvertes d'une couche de protection contre la corrosion, par exemple d'une couche d'un alliage cobalt-manganèse ou cobalt-cérium. Ainsi, lors de la connexion des extensions latérales de deux interconnecteurs la conductivité électrique n'est pas réduite pas une couche d'oxyde isolant électrique. En variante, lors de la réalisation des connexions une étape de retrait de la couche d'oxyde éventuellement formées sur les extensions latérales est prévue, en particulier sur les faces destinées à être en contact. Ce retrait est par exemple réalisé par abrasion.

Dans un autre exemple de réalisation, chaque plaque intermédiaire comporte une extension latérale unique qui est formée par un prolongement du bord latéral de la plaque intermédiaire. Cet exemple présente l'avantage d'offrir une grande surface de dérivation néanmoins la connexion avec la plaque intermédiaire de l'autre interconnecteur peut être complexe.

De préférence les extensions latérales sont d'un seul tenant avec la plaque intermédiaire, ce qui réduit la résistance électrique et simplifie la fabrication. Les extensions latérales peuvent être réalisées par découpe simultanément au reste de la plaque intermédiaire. En variante, les extensions latérales sont rapportées sur la plaque intermédiaire, par exemple par soudage.

Avantageusement la plaque intermédiaire ainsi que les extensions latérales et les plaques d'extrémité 10, 12 sont en acier ferritique de type Crofer 22 ou K41.

Dans un exemple de réalisation avantageux représenté sur la figure 5, l'élément d'isolation électrique 2 présente des dimensions dans le plan de sorte à couvrir les extensions latérales 6 et ainsi assurer l'isolation électrique également entre deux extensions latérales 6 superposées tant que la cellule entre les deux interconnecteurs fonctionne normalement.

Lorsqu'une connexion entre deux interconnecteurs est souhaitée pour court-circuiter la cellule disposée entre ces deux interconnecteurs, les portions de l'élément 2 recouvrant les extensions latérales sont retirées permettant une mise en contact des extensions latérales en regard.

De manière très avantageuses, les portions de l'élément d'isolation électrique 2 au droit des extensions latérales 6 sont délimitées par des prédécoupes 20 facilitant leur retrait par une casse aisée en cas de besoin.

Un exemple de procédé de mise en court-circuit d'une cellule va maintenant être décrit.

Lorsqu'une cellule défaillante au sein de l'empilement est détectée, cette détection étant par exemple obtenue par les mesures de tension de chaque cellule qui sont effectuées pour suivre l'évolution de l'état de vie de l'empilement, il est décidé d'isoler électriquement celle-ci du reste de l'empilement pour qu'elle ne dégrade pas le fonctionnement du dispositif.

Les extensions latérales 6 des plaques intermédiaires situées de part et d'autre de la cellule défaillante sont rapprochées les unes des autres dans une direction hors-plan, i.e. chaque extension latérale 6 est déformée vers l'extension latérale 6 en regard de l'autre plaque intermédiaire. Ensuite elles sont solidarisées l'une à l'autre de préférence par soudage par pointage. Il est à noter que l'épaisseur des extensions latérales est de l'ordre de quelques dixièmes de mm, celles-ci peuvent donc être facilement déformées. En outre, la distance entre deux extensions latérales en regard est de l'ordre de l'épaisseur d'une cellule et de ses couches de contact, de l'ordre de 1 mm. Par conséquent, la déformation requise pour une mise en contact des extensions latérales est faible.

Toutes les extensions latérales des deux plaques intermédiaires sont alors connectées formant une surface de dérivation dont la conductivité électrique est supérieure à celle de la cellule défaillante. Le courant i circule alors directement d'une plaque intermédiaire à l'autre comme cela est schématisé sur la figure 2, la tension dans la cellule défaillante chute et elle ne génère plus de chaleur.

Afin d'illustrer l'efficacité de la présente invention, la tension aux bornes de chaque cellule d'un empilement a été mesurée en fonction du courant appliquée dans le cas d'un empilement de 25 cellules et de 100 cm² de surface active, l'empilement fonctionnant en électrolyse. Le débit de gaz envoyé est de 6 Nml/min/cell/cm² de mélange de vapeur d'eau (90%) et de H2 (10%).

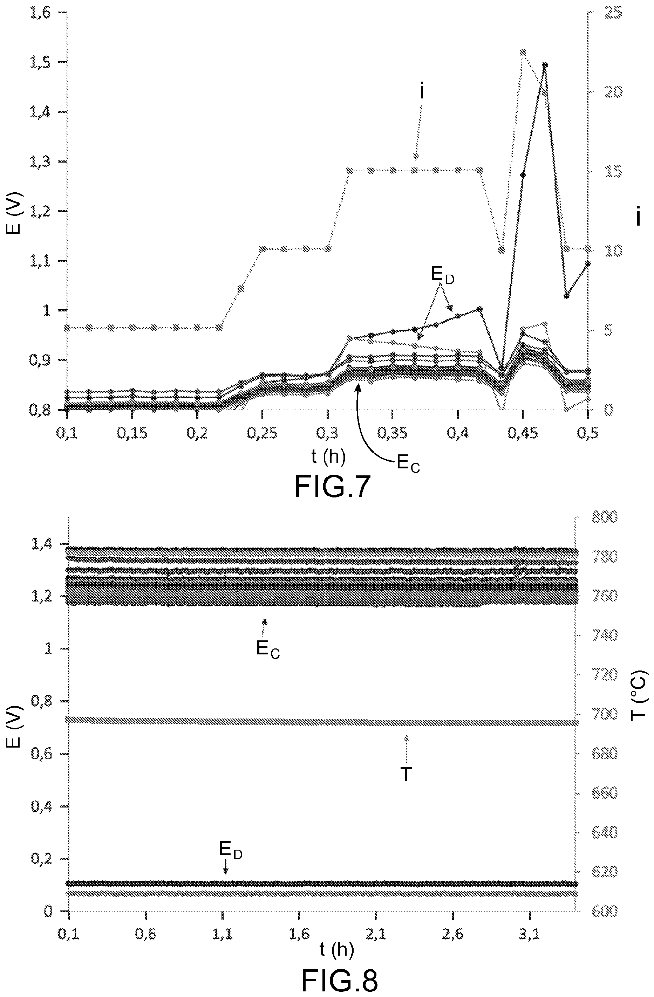

Sur la figure 7, on peut voir l'évolution des tensions en V au cours du temps en h pour des courants i en A progressivement augmentés. Le courant maximal acceptable est de 15 A puisque pour des courants supérieurs les tensions de deux cellules dépassent 1,4 V. Ces deux cellules sont défaillantes. Au-delà de cette tension, elles vont générer de la chaleur.

Sur la figure 8, on peut voir l'évolution des tensions pour un courant imposé à 50A pour le même empilement et dans les mêmes conditions, mais les cellules défaillantes ont été isolées. On constate que les deux cellules défaillantes présentent des tensions de l'ordre de 0,1 V et les autres cellules fonctionnent correctement sans que leur tension dépasse 1,4 V et de l'hydrogène est bien produit. On observe en outre une bonne stabilité des tensions des cellules avec dérivation. De plus la température de l'empilement a également été mesurée, celle-ci est stable ce qui témoigne de l'efficacité de l'invention.

Grâce à l'invention, il est relativement aisé d'isoler une ou plusieurs cellules défaillantes afin de protéger le fonctionnement d'un module et prolonger sa durée de vie.

## Revendications

1. Interconnecteur (I) pour module électrochimique qui comporte un empilement de cellules électrochimiques (CL) et d'interconnecteurs (I), chaque cellule (CL) étant disposée entre deux interconnecteurs (I) et en contact électrique et mécanique avec lesdits interconnecteurs (I), et des éléments d'isolation électrique (2), chaque élément d'isolation électrique (2) étant interposé entre deux interconnecteurs (I) et entourant une cellule (CL), dans lequel l'interconnecteur (I) comporte au moins une plaque intermédiaire (8) reçue entre deux plaques d'extrémité (10, 12) définissant entre elles des chambres d'alimentation en gaz et de collecte de gaz, dans lequel la plaque intermédiaire (8) comporte une zone centrale (ZC) délimitée extérieurement par une zone latérale (ZL) comportant n zones latérales de dérivation (6), n étant au moins égal à 1, chaque zone latérale de dérivation (6) étant configurée pour pouvoir être rapprochée d'une zone latérale de dérivation (6) d'une plaque intermédiaire d'un interconnecteur (I) directement adjacent dans l'empilement, et entrer en contact avec celle-ci de sorte à assurer une conduction électrique entre les deux interconnecteurs (I), la plaque intermédiaire (8) n'étant pas recouverte par au moins l'une des deux plaques d'extrémité (10, 12) au niveau d'une zone latérale de dérivation (6).

2. Interconnecteur selon la revendication 1, dans lequel tout ou partie des n zones latérales de dérivation (6) se présente sous la forme de n zones exposées (6) de la plaque intermédiaire (8), non superposées à au moins l'une des deux plaques d'extrémité (10, 12), notamment n zones exposées (6) situées au niveau d'un ou plusieurs angles de la plaque intermédiaire (8).

3. Interconnecteur selon la revendication 1 ou 2, dans lequel tout ou partie des n zones latérales de dérivation (6) se présente sous la forme de n extensions latérales (6) en saillie extérieurement par rapport à la zone latérale (ZL) de la plaque intermédiaire (8), les n extensions latérales s'étendant notamment latéralement au-delà des rebords des plaques d'extrémité (10, 12).

4. Interconnecteur selon l'une des revendications précédentes, dans lequel les zones latérales de dérivation (6) sont réparties sur le contour extérieur de chaque interconnecteur (I) autour de l'axe de l'empilement.

5. Interconnecteur selon l'une quelconque des revendications précédentes, dans lequel les zones latérales de dérivation (6) sont d'un seul tenant avec la plaque intermédiaire.

6. Interconnecteur selon l'une quelconque des revendications précédentes, dans lequel les zones latérales de dérivation (6) sont recouvertes par un matériau conducteur électrique et protégeant de la corrosion, par exemple un alliage cobalt manganèse ou cobalt cérium.

7. Module pour dispositif électrochimique comportant un empilement de cellules électrochimiques (CL) et d'interconnecteurs (I) selon l'une des revendications 1 à 6, chaque cellule (CL) étant disposée entre deux interconnecteurs (I) et en contact électrique et mécanique avec lesdits interconnecteurs (I), et des éléments d'isolation électrique (2), lesdites zones latérales de dérivation (6) de deux interconnecteurs directement adjacents étant au moins en partie en regard.

8. Module selon la revendication 7, dans lequel un élément conducteur électriquement est ajouté entre lesdites zones latérales de dérivation (6) de deux interconnecteurs (I) directement adjacents, notamment un grille d'or et/ou une pâte d'or.

9. Module selon la revendication 7 ou 8, dans lequel le rapport entre la surface de dérivation formée par les zones latérales de dérivation (6) de deux interconnecteurs (I) et la surface active de la cellule située entre les deux interconnecteurs (I) est compris entre 1/100 et 1/2 et est de préférence égal à 1/10.

10. Module selon l'une des revendications 7 à 9, dans lequel chaque élément d'isolation électrique (2) recouvre les zones latérales de dérivation (6).

11. Module selon la revendication 10, dans lequel chaque élément d'isolation électrique (2) comporte des prédécoupes (20) pour faciliter le retrait de portion de l'élément d'isolation électrique au droit des zones latérales de dérivation (6).

12. Electrolyseur à oxyde solide comportant un module selon l'une quelconque des revendications 7 à 11, une alimentation en gaz des cellules, une collecte des gaz produits par chaque cellule et une alimentation électrique configurée pour alimenter en série les cellules.

13. Pile à combustible à oxyde solide comportant un module selon l'une quelconque des revendications 7 à 11, une alimentation en dihydrogène (H₂) et en dioxygène (O₂) ou en méthane (CH₄) et en air des cellules, une collecte des gaz produits par chaque cellule et des moyens de collecte du courant électrique produit par chaque cellule électrochimique.

14. Procédé de mise en court-circuit d'une cellule d'un module selon l'une des revendications 7 à 11, comportant :
- mise en contact, éventuellement par déformation, des n zones latérales de dérivation (6) des interconnecteurs (I) disposés directement de part et d'autre de ladite cellule, de sorte à rapprocher les zones latérales de dérivation (6) l'une de l'autre,
- solidarisation des zones latérales de dérivation (6) afin de former n chemins conducteurs électriques entre les deux interconnecteurs (I).

15. Procédé selon la revendication 14, comportant une étape de retrait par abrasion d'une couche d'oxyde sur chacune des zones latérales de dérivation (6) préalablement à leur solidarisation.

## Patentansprüche

1. Interkonnektor (I) für ein elektrochemisches Modul, das einen Stapel elektrochemischer Zellen (CL) und Interkonnektoren (I), wobei jede Zelle (CL) zwischen zwei Interkonnektoren (I) angeordnet ist und mit den Interkonnektoren (I) in elektrischem und mechanischem Kontakt steht, und elektrische Isolierelemente (2) umfasst, wobei jedes elektrische Isolierelement (2) zwischen zwei Interkonnektoren (I) eingefügt ist und eine Zelle (CL) umgibt, wobei der Interkonnektor (I) mindestens eine Zwischenplatte (8) umfasst, die zwischen zwei Endplatten (10, 12) aufgenommen ist, welche zwischen sich Gasversorgungs- und Gassammelkammern definieren, wobei die Zwischenplatte (8) einen zentralen Bereich (ZC) umfasst, der außen durch einen seitlichen Bereich (ZL) begrenzt ist, der n seitliche Bypassbereiche (6) umfasst, wobei n mindestens gleich 1 ist, wobei jeder seitliche Bypassbereich (6) so ausgelegt ist, dass er einem seitlichen Bypassbereich (6) einer Zwischenplatte eines Interkonnektors (I), der im Stapel direkt angrenzt, angenähert werden und mit diesem in Kontakt gelangen kann, um eine elektrische Leitung zwischen den zwei Interkonnektoren (I) zu gewährleisten, wobei die Zwischenplatte (8) an einem seitlichen Bypassbereich (6) von mindestens einer der zwei Endplatten (10, 12) nicht bedeckt ist.

2. Interkonnektor nach Anspruch 1, wobei alle oder ein Teil der n seitlichen Bypassbereiche (6) in Form von n freiliegenden Bereichen (6) der Zwischenplatte (8), die mindestens eine der zwei Endplatten (10, 12) nicht überlappen, insbesondere als n freiliegende Bereiche (6) vorliegen, die sich an einem oder mehreren Winkeln der Zwischenplatte (8) befinden.

3. Interkonnektor nach Anspruch 1 oder 2, wobei alle oder ein Teil der n seitlichen Bypassbereiche (6) in Form von n seitlichen Erstreckungen (6) vorliegen, die außen in Bezug auf den seitlichen Bereich (ZL) der Zwischenplatte (8) vorspringen, wobei sich die n seitlichen Erstreckungen insbesondere seitlich über die Kanten der Endplatten (10, 12) hinaus erstrecken.

4. Interkonnektor nach einem der vorstehenden Ansprüche, wobei die seitlichen Bypassbereiche (6) an der Außenkontur jedes Interkonnektors (I) um die Achse des Stapels herum verteilt sind.

5. Interkonnektor nach einem der vorstehenden Ansprüche, wobei die seitlichen Bypassbereiche (6) einstückig mit der Zwischenplatte ausgebildet sind.

6. Interkonnektor nach einem der vorstehenden Ansprüche, wobei die seitlichen Bypassbereiche (6) von einem elektrisch leitfähigen und vor Korrosion schützenden Material, zum Beispiel einer Kobalt-Mangan- oder Kobalt-Cer-Legierung, bedeckt sind.

7. Modul für eine elektrochemische Vorrichtung, die einen Stapel elektrochemischer Zellen (CL) und Interkonnektoren (I) nach einem der Ansprüche 1 bis 6, wobei jede Zelle (CL) zwischen zwei Interkonnektoren (I) angeordnet ist und mit den Interkonnektoren (I) in elektrischem und mechanischem Kontakt steht, und elektrische Isolierelemente (2) umfasst, wobei die seitlichen Bypassbereiche (6) zweier direkt aneinandergrenzender Interkonnektoren mindestens zum Teil einander zugewandt sind.

8. Modul nach Anspruch 7, wobei zwischen den seitlichen Bypassbereichen (6) zweier direkt aneinandergrenzender Interkonnektoren (I) ein elektrisch leitfähiges Element, insbesondere ein Goldgitter und/oder eine Goldpaste, hinzugefügt ist.

9. Modul nach Anspruch 7 oder 8, wobei das Verhältnis zwischen der Bypassfläche (I), die von den seitlichen Bypassbereichen (6) zweier Interkonnektoren (I) gebildet wird, und der aktiven Fläche der Zelle, die sich zwischen den zwei Interkonnektoren (I) befindet, zwischen 1/100 und 1/2 liegt und vorzugsweise gleich 1/10 ist.

10. Modul nach einem der Ansprüche 7 bis 9, wobei jedes elektrische Isolierelement (2) die seitlichen Bypassbereiche (6) bedeckt.

11. Modul nach Anspruch 10, wobei jedes elektrische Isolierelement (2) Vorschnitte (20) umfasst, um das Entfernen eines Abschnitts des elektrischen Isolierelements auf Höhe der seitlichen Bypassbereiche (6) zu erleichtern.

12. Festoxid-Elektrolysegerät, das ein Modul nach einem der Ansprüche 7 bis 11, eine Gasversorgung der Zellen, eine Sammlung der von jeder Zelle erzeugten Gase und eine Stromversorgung umfasst, die so ausgelegt ist, dass sie die Zellen in Reihe versorgt.

13. Festoxid-Brennstoffzelle, die ein Modul nach einem der Ansprüche 7 bis 11, eine Versorgung der Zellen mit Wasserstoff (H₂) und Sauerstoff (O₂) oder Methan (CH₄) und Luft, eine Sammlung der von jeder Zelle erzeugten Gase und Mittel zum Sammeln des von jeder elektrochemischen Zelle erzeugten elektrischen Stroms umfasst.

14. Verfahren zum Kurzschließen einer Zelle eines Moduls nach einem der Ansprüche 7 bis 11, umfassend:
- Inkontaktbringen, gegebenenfalls durch Verformen, der n seitlichen Bypassbereiche (6) der Interkonnektoren (I), die direkt beiderseits der Zelle angeordnet sind, um die seitlichen Bypassbereiche (6) einander anzunähern,
- festes Verbinden der seitlichen Bypassbereiche (6), um n elektrisch leitfähige Bahnen zwischen den zwei Interkonnektoren (I) zu bilden.

15. Verfahren nach Anspruch 14, das einen Schritt des Entfernens einer Oxidschicht auf jedem der seitlichen Bypassbereiche (6) durch Abrasion vor deren festen Verbinden umfasst.

## Claims

1. Interconnector (I) for an electrochemical module that includes a stack of electrochemical cells (CL) and interconnectors (I), each cell (CL) being disposed between two interconnectors (I) and in electrical and mechanical contact with said interconnectors (I), and electrical insulating elements (2), each electrical insulating element (2) being interposed between two interconnectors (I) and surrounding a cell (CL), wherein the interconnector (I) includes at least one intermediate plate (8) received between two end plates (10, 12) defining gas supply and gas collection chambers therebetween, wherein the intermediate plate (8) includes a central region (ZC) delimited externally by a lateral region (ZL) including n lateral branch regions (6), n being at least equal to 1, each lateral branch region (6) being configured to be movable towards a lateral branch region (6) of an intermediate plate of a directly adjacent interconnector (I) in the stack, and to come into contact with same so as to provide electrical conduction between the two interconnectors (I), the intermediate plate (8) not being covered by at least one of the two end plates (10, 12) at a lateral branch region (6).

2. Interconnector according to claim 1, wherein all or part of the n lateral branch regions (6) are in the form of n exposed regions (6) of the intermediate plate (8), not superimposed on at least one of the two end plates (10, 12), particularly n exposed regions (6) located at one or more angles of the intermediate plate (8).

3. Interconnector according to claim 1 or 2, wherein all or part of the n lateral branch regions (6) are in the form of n lateral extensions (6) protruding externally in relation to the lateral region (ZL) of the intermediate plate (8), the n lateral extensions particularly extending laterally beyond the edges of the end plates (10, 12).

4. Interconnector according to one of the preceding claims, wherein the lateral branch regions (6) are distributed around the outer contour of each interconnector (I) about the axis of the stack.

5. Interconnector according to any one of the preceding claims, wherein the lateral branch regions (6) are integral with the intermediate plate.

6. Interconnector according to any one of the preceding claims, wherein the lateral branch regions (6) are covered by an electrically conductive and corrosion-protecting material, for example a cobalt manganese or cobalt-cerium alloy.

7. Module for an electrochemical device including a stack of electrochemical cells (CL) and interconnectors (I) according to one of claims 1 to 6, each cell (CL) being disposed between two interconnectors (I) and in electrical and mechanical contact with said interconnectors (I), and electrical insulating elements (2), said lateral branch regions (6) of two directly adjacent interconnectors being at least partly facing.

8. Module according to claim 7, wherein an electrically conductive element is added between said lateral branch regions (6) of two directly adjacent interconnectors (I), particularly a gold gate and/or a gold paste.

9. Module according to claim 7 or 8, wherein the ratio between the branch surface formed by the lateral branch regions (6) of two interconnectors (I) and the active surface of the cell located between the two interconnectors (I) is between 1/100 and 1/2 and is preferably equal to 1/10.

10. Module according to one of claims 7 to 9, wherein each electrical insulating element (2) covers the lateral branch regions (6).

11. Module according to claim 10, wherein each electrical insulating element (2) includes pre-cuts (20) to facilitate the removal of a portion of the electrical insulating element in line with the lateral branch regions (6).

12. Solid-oxide electrolyser including a module according to any one of claims 7 to 11, a gas supply of the cells, a collection of the gases produced by each cell and a power supply configured to supply in series the cells.

13. Solid-oxide fuel cell including a module according to any one of claims 7 to 11, a dihydrogen (H₂) and dioxygen (O₂) or methane (CH₄) and air supply of the cells, a collection of the gases produced by each cell and means for collecting the electric current produced by each electrochemical cell.

14. Method for short-circuiting a cell of a module according to one of claims 7 to 11, including:
- placing in contact, possibly by deformation, the n lateral branch regions (6) of the interconnectors (I) disposed directly on either side of said cell, so as to move the lateral branch regions (6) towards one another,
- joining the lateral branch regions (6) together in order to form n electrically conductive paths between the two interconnectors (I).

15. Method according to claim 14, including a step of removing by abrasion an oxide layer on each of the lateral branch regions (6) prior to joining them together.
